# EUROPÄISCHE PATENTSCHRIFT

(11) **EP 0 883 994 B1**
(45) Veröffentlichungstag und Bekanntmachung des Hinweises auf die Patenterteilung: **17.09.2003**
(21) Anmeldenummer: 98109606.8
(22) Anmeldetag: 27.05.1998
(51) Int. Cl.: A21B 3/04, A21B 1/26, A21B 1/48

(54) **Backofen**
Baking oven
Four de cuisson

(30) Priorität: 09.06.1997 DE 19724112; 06.05.1998 DE 19820061
(43) Veröffentlichungstag der Anmeldung: 16.12.1998
(73) Patentinhaber: Werner & Pfleiderer Lebensmitteltechnik GmbH, 91550 Dinkelsbühl (DE)
(72) Erfinder: Knost, Dieter, 91550 Dinkelsbühl (DE)
(74) Vertreter: Rau, Manfred, Dr. Dipl.-Ing.

(56) Entgegenhaltungen:
- US-A- 4 366 177
- US-A- 4 556 572

## Beschreibung

Die Erfindung betrifft einen Backofen, und zwar einen sogenannten Mehretagen-Backofen, gemäß den Oberbegriff von Anspruch 1. Solch ein Backofen ist aus der Anmeldung US-A-4 366 177 bekannt.

Es sind Mehretagen-Durchlauföfen bekannt, bei denen in einem langgestreckten Herdkörper durchgehende Herde ausgebildet sind, in denen jeweils ein Backband angeordnet ist. Diese Durchlauföfen können für chargenweisen, d. h. schrittweisen, oder für kontinuierlichen Betrieb ausgelegt sein. Die Beladung und Entladung dieser Öfen kann automatisiert werden, um geforderte Produktionsmengen tatsächlich auch realisieren zu können. Mit diesen Öfen können auf den verschiedenen Backbändern nur sehr eingeschränkt gleichzeitig unterschiedliche Backwaren mit jeweils rezeptabhängigen Backverläufen gebacken werden. Weiterhin können diese Öfen nicht rationell für Spezialbrotsorten in kleinen Mengen eingesetzt werden. Schließlich sind diese Öfen in ihrer Leistung, d. h. in ihrer Kapazität verhältnismäßig starr.

Der Erfindung liegt die Aufgabe zugrunde, einen Mehretagen-Backofen zu schaffen, der in seiner Größe flexibel ist und der das Backen sehr unterschiedlicher Backgüter mit unterschiedlichen rezeptabhängigen Backverläufen ermöglicht.

Diese Aufgabe wird erfindungsgemäß durch die Merkmale des Anspruches 1 gelöst. Der Kern der Erfindung liegt in dem Modul-Aufbau des Ofens, der beliebige Erweiterungen zuläßt. Wenn die Kapazität vergrößert werden soll, werden ein oder zwei weitere Ofen-Module eingefügt; lediglich das Backband muß ggf. verlängert werden. Dadurch, daß jedes Modul eine eigenständig regelbare Heizeinrichtung aufweist, können sehr genau unterschiedliche Backverläufe ausgeführt werden, die für jedes Backgut unterschiedlich sind.

Durch die Weiterbildung nach Anspruch 2 wird die Trennung der einzelnen Backzonen in den einzelnen Ofen-Modulen noch verstärkt.

Die Ansprüche 3 und 4 geben an, wie die Backbänder geführt werden.

Die erfindungsgemäße Modulbauweise ist für jede Art der Beheizung, also elektrische Beheizung, Thermoölbeheizung und Heizgas-Beheizung möglich; sie ermöglicht insbesondere aber den Einsatz der besonders kostengünstigen Heizgas-Beheizung mit eindeutig voneinander getrennten Heizgaskreisläufen in jedem Ofen-Modul. Dadurch, daß die Durchströmung der Heizregister hierbei geradlinig und quer zur Längsrichtung des Ofens erfolgt, ist der Wärmeübergang über die jeweilige Heizfläche im Ofen sehr gleichmäßig, so daß in den Backräumen selber keine Temperaturgradienten auftreten.

Weitere Merkmale, Vorteile und Einzelheiten der Erfindung ergeben sich aus der nachfolgenden Beschreibung zweier Ausführungsbeispiele anhand der Zeichnung. Es zeigt:
- Fig. 1: einen vertikalen Längsschnitt durch einen als Durchlaufofen ausgebildeten Backofen nach der Erfindung,
- Fig. 2: einen Querschnitt durch das erste Ofen-Modul des Backofens,
- Fig. 3: eine in Fig. 2 mit "III" bezeichnete Einzelheit in vergrößerter Darstellung,
- Fig. 4: eine in Fig. 2 mit "IV" bezeichnete Einzelheit in vergrößerter Darstellung,
- Fig. 5: einen Querschnitt durch den Ofen in einer Darstellung gemäß Fig. 2 mit einer abgewandelten Ausführung des Beschwadungssystems,
- Fig. 6: einen als Reversierofen ausgebildeten Backofen nach der Erfindung in einem vertikalen Längsschnitt
- Fig. 7: einen vertikalen Längsschnitt durch einen als kontinuierlich betreibbaren Durchlauftunnelofen ausgebildeten Backofen nach der Erfindung,
- Fig. 8: eine perspektivische Darstellung eines Backofens gemäß einer weiteren Ausführungsform und
- Fig. 9: einen Querschnitt durch das erste Ofen-Modul des Backofens gemäß Fig. 8.

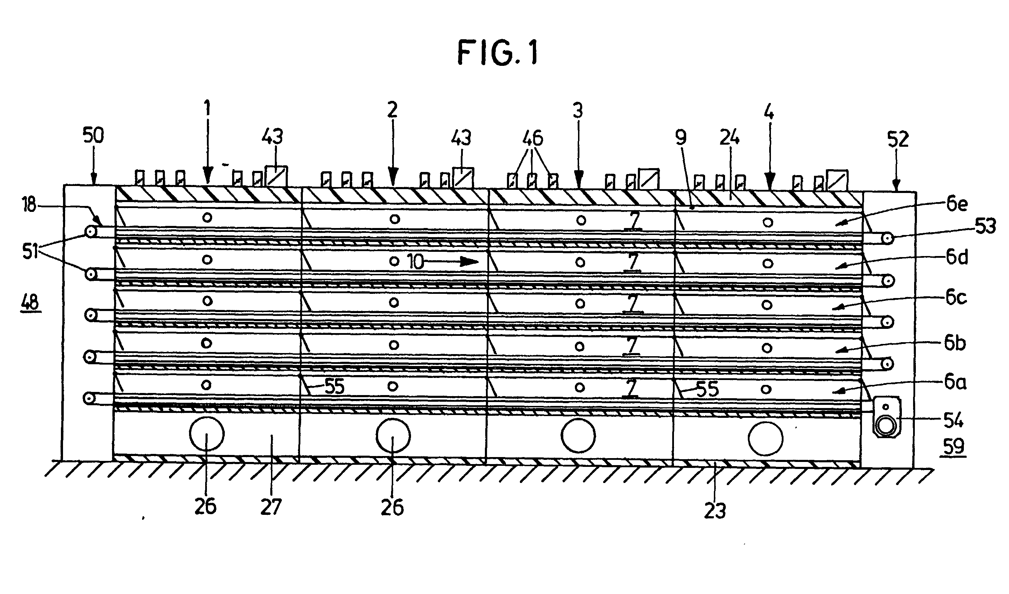

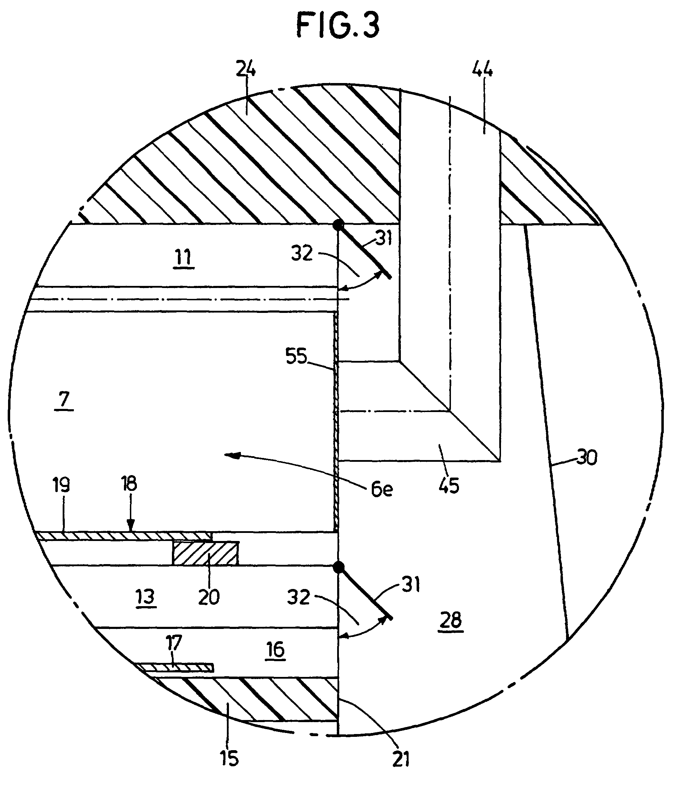

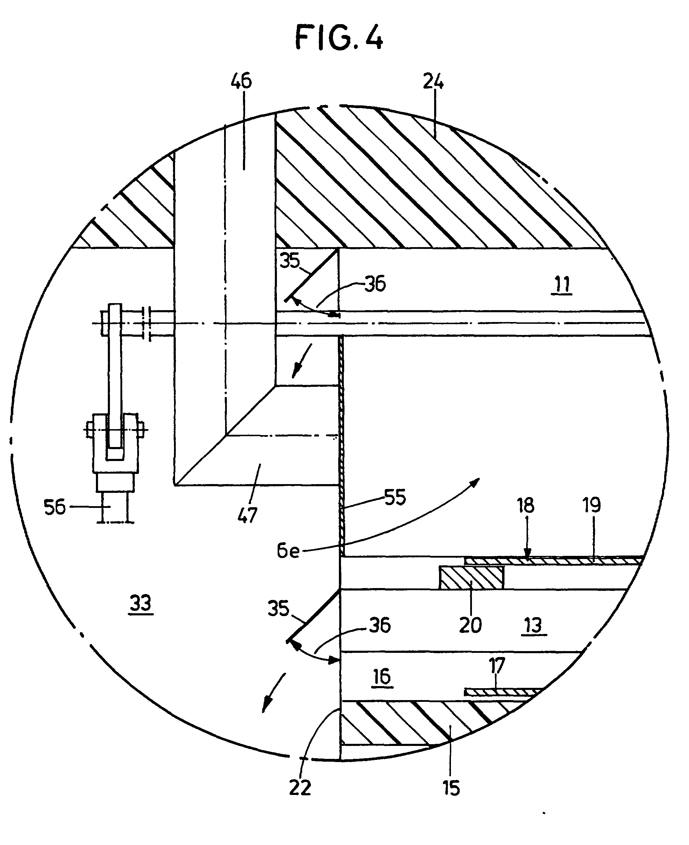

Der in Fig. 1 dargestellte Backofen ist ein sogenannter Mehretagen-Durchlaufofen, der aus mehreren Ofen-Modulen 1, 2, 3, 4 besteht, die hintereinander angeordnet und miteinander verbunden sind. Jedes Modul weist einen Herdkörper 5 auf, in dem mehrere, im Ausführungsbeispiel nach Fig. 1 bis 4 fünf Herde 6a, 6b, 6c, 6d und 6e etagenartig übereinander angeordnet sind. Jeder Herd weist einen Backraum 7 auf, der an seiner Oberseite durch eine im wesentlichen nur durch Wärmestrahlung heizende obere, durch ein dünnes Blech gebildete Heizfläche 8 begrenzt ist. Diese Heizfläche 8 ist Teil eines Oberhitze-Heizregisters 9, das horizontal und quer zur Längsrichtung 10 des Ofens verlaufende Heizgaskanäle 11 aufweist. Jeder Backraum 7 weist an seiner Unterseite ein im Prinzip gleichartig mit den Heizregistern 9 aufgebautes Unterhitze-Heizregister 12 auf, das ebenfalls horizontal und quer zur Längsrichtung 10 verlaufende Heizgaskanäle 13 aufweist und durch eine Heizfläche 14 zum Backraum 7 begrenzt wird. Auch diese Heizfläche 14 wird durch ein dünnes Blech gebildet.

Unterhalb jedes Unterhitze-Heizregisters 12 und im Abstand zu diesem, d. h. oberhalb des Oberhitze-Heizregisters 9 des nächstunteren Herdes 6b bis 6e ist eine Zwischenisolierung 15 angebracht, um die einzelnen Herde 6a bis 6e thermisch möglichst weitgehend voneinander zu trennen. Zwischen einem Unterhitze-Heizregister 12 und der darunterliegenden Zwischenisolierung 15 ist ein Rückführkanal 16 für das Untertrum 17 eines Backbandes 18, dessen Obertrum 19 oberhalb der Heizfläche 14 des Unterhitze-Heizregisters 12 eines Herdes 6a bis 6e durch dessen Backraum 7 geführt wird. Es wird hierbei auf Führungen 20 geführt, die auf dem Unterhitze-Heizregister 12 abgestützt sind.

Die Herde 6a bis 6e werden durch jeweils eine vertikale Seitenwand 21 und eine Seitenwand 22 begrenzt, die im jeweiligen Herdkörper 5 in Längsrichtung 10 des Ofens verlaufen und am Boden 23 und der Decke 24 des jeweiligen Herdkörpers 5 eines Moduls 1 bis 4 abgestützt bzw. befestigt sind.

Unterhalb des untersten Herdes 6a ist eine im wesentlichen zylindrische Brennkammer 25 angeordnet, in die ein Brenner 26 einmündet. Der Brennkammer 25 ist ein Heizgas-Mischraum 27 nachgeordnet, der wiederum in das untere Ende eines Heizgas-Zuführkanals 28 einmündet, der zwischen der einen Seitenwand 21 der Herde 6a bis 6e und der benachbarten Außenwand 29 des Herdkörpers 5 ausgebildet ist. Der Heizgas-Zuführkanal 28 wird außer durch die Seitenwand 21 durch eine zur Seitenwand 21 nach oben hin geneigte Begrenzungswand 30 begrenzt, so daß der Heizgas-Zuführkanal 28 einen nach oben abnehmenden Querschnitt aufweist. Die Heizgaskanäle 11 und 13 der Heizregister 9 und 12 sind an den Heizgas-Zuführkanal 28 angeschlossen, wobei jeweils Regelklappen 31 vorgesehen sind, mittels derer die Größe der Eintrittsöffnung 32 jedes Heizregisters 9 bzw. 12 veränderbar ist.

Die Heizgaskanäle 11 und 13 aller Herde 6a bis 6e münden in einen Heizgas-Sammelraum 33, der zwischen der Seitenwand 22 und einer zugeordneten Außenwand 34 des Herdkörpers 5 angeordnet ist. Alternativ oder kumulativ zu den Regelklappen 31 in der jeweiligen Eintrittsöffnung 32 der Heizgaskanäle 11 bzw. 13 können auch gleichartig ausgebildete Regelklappen 35 in den Austrittsöffnungen 36 der Heizgaskanäle 11 bzw. 13 in den Heizgas-Sammelraum 33 vorgesehen sein. Der Heizgas-Sammelraum 33 mündet in ein Heizgas-Gebläse 37, das mittels eines Motors 38 angetrieben wird. Dieses Gebläse 37 wiederum mündet in einen Heizgas-Rückführkanal 39, dem die Brennkammer 25 nachgeordnet ist. Die Decke 24, der Boden 23 und die Außenwände 29, 34 des Herdkörpers sind thermisch isoliert.

Die durch die Verbrennung im Brenner 26 entstehenden heißen Rauchgase strömen entsprechend den Strömungsrichtungspfeilen 40 aus der Brennkammer 25 in den Heizgas-Mischraum 27. Dort werden sie mit entsprechend den Strömungsrichtungspfeilen 41 zugeführten abgekühlten Heizgasen gemischt, wodurch Heizgas mit einer entsprechenden Mischtemperatur erzeugt wird. Dieses Heizgas wird entsprechend den Strömungsrichtungspfeilen 41a durch den Heizgas-Zuführkanal 28 und die Eintrittsöffnungen 32 den Heizregistern 9 bzw. 12 zugeführt. Durch den Sog des Gebläses 37 wird es durch die Heizregister 9 bzw. 12 gesaugt und verläßt diese durch die Austrittsöffnungen 36. Es durchströmt den Heizgas-Sammelraum 33 und wird dann mittels des Gebläses 37 in den Heizgas-Rückführkanal 39 gedrückt, von wo aus es - wie bereits erläutert - zur Brennkammer 25 gelangt. In dem Maße, in dem Heizgas vom Brenner 26 dem Mischraum 27 neu zugeführt wird, werden abgekühlte Heizgase entsprechend dem Strömungsrichtungspfeil 42 durch einen Kamin 43 abgeführt. Die Heizgase durchströmen die Heizregistern 9 bzw. 12 geradlinig quer zur Längsrichtung 10 des Ofens. Sie können auch zum Zwecke besserer Wärmeübertragung durch in den Heizregister 9 bzw. 12 angeordnete Formelemente verwirbelt oder umgelenkt werden.

In den Ofen-Modulen 1 bis 4 ist jeweils im Bereich des Heizgas-Zuführkanals 28 pro Herd 6a bis 6e eine vertikal verlaufende und nach oben herausgeführte Zuführleitung 44 angeordnet, die mit einer Stichleitung 45 durch die Seitenwand 21 hindurch in den Backraum 7 jedes Herdes 6a bis 6e eintritt. Durch diese Zuführleitung 44 kann jedem Herd 6a bis 6e gesondert entweder Schwaden, d. h. Wasserdampf, zum Beschwaden des Backgutes oder Frischluft zum Entschwaden zugeführt werden. Im Bereich des Heizgas-Sammelraums 33 sind den Zuführleitungen 44 entsprechende ebenfalls nach oben herausgeführte Abführleitungen 46 angeordnet, die jeweils mittels einer Stichleitung 47 durch die Seitenwand 22 jeweils mit dem Backraum 7 je eines Herdes 6a bis 6e verbunden sind.

Im Ofen-Modul 1, d. h. benachbart zur Beladeseite 48, wird durch die Zuführleitung 44 außerhalb des Ofens erzeugter Schwaden, d. h. Dampf, in die Backräume 7 eingeführt und durch die Abführleitungen 46 abgeführt. In den Modulen 2 bis 4 wird durch die Zuführleitungen 44 Frischluft zugeführt, während durch die Abführleitungen 46 Abluft zusammen mit Schwaden, der im jeweiligen Backraum 7 entsteht, abgeführt wird.

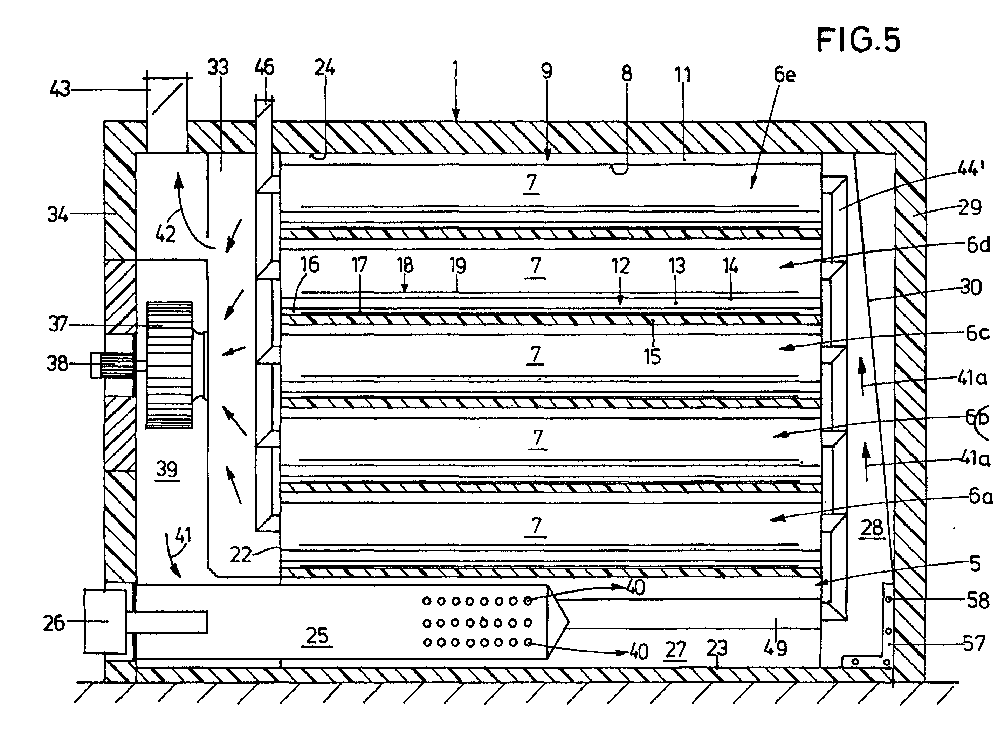

Bei dem Ausführungsbeispiel nach Fig. 5 ist eine interne Schwadenerzeugung für das erste Ofen-Modul 1 vorgesehen. Hierbei sind beiderseits der Brennkammer 25 Schwadenerzeugungs-Rohre 49 angeordnet, in die in bekannter Weise Wasser eingespritzt wird, das durch die vom Brenner 26 stammende Wärme verdampft wird. Diese Rohre 49 sind an die Zuführleitungen 44' angeschlossen, die in diesem Fall nicht aus dem Herdkörper 5 nach außen geführt sind.

Auf der Beladeseite 48 ist ein Kopf-Element 50 dem ersten Ofen-Modul 1 vorgeordnet, in dem Umlenkrollen 51 für die endlosen Backbänder 18 gelagert sind. Dem letzten Ofen-Modul 4 ist ein Abschlußelement 52 nachgeordnet, in dem ebenfalls Umlenkrollen 53 für die Backbänder 18 gelagert sind. Die Umlenkrollen 51 bzw. 53 sind mittels nur angedeuteter Antriebsmotoren 54 antreibbar. Die Längsrichtung 10 des Ofens entspricht der Transportrichtung des Backbandes 18. Jedes Backband 18 erstreckt sich durch die fluchtend hintereinander angeordneten Backräume 7 der insoweit einander jeweils zugeordneten Herde 6a, 6b, 6c, 6d bzw. 6e. Damit in den einzelnen Backräumen 7 eines jeden Moduls 1 bzw. 2 bzw. 3 bzw. 4 unterschiedliche Backverhältnisse eingestellt werden können, sind die Backräume jedes Moduls 1 bis 4 mit einer Klappe 55 verschließbar. Da eine Klappe 55 mehr vorhanden sein muß als Ofen-Module 1 bis 4 vorhanden sind, muß entsprechend noch ein Satz Klappen 55 entweder am Kopf-Element 50 oder am Abschlußelement 52 vorgesehen sein. Diese Klappen 55 sind mittels nur angedeuteter Stellmotoren 56 betätigbar. Sie verhindern in geschlossenem Zustand, daß durch die Backräume 7 ein kaminartiger Durchzug entsteht.

Die völlig eigenständigen Module 1 bis 4 werden jeweils an in der Zeichnung nur angedeuteten Flanschen 57 mittels Schrauben 58 miteinander verbunden. Das Kopf-Element 50 wird in gleicher Weise mit dem ersten Modul 1 und das Abschlußelement 52 entsprechend mit dem letzten Modul 4 verbunden. Das Kopf-Element 50 kann auch in das erste Modul 1 integriert sein. Entsprechendes gilt für eine Integration des Abschlußelementes 52 in das letzte Modul 4. Je nach gewünschter Leistung des Ofens können bis zu fünfzehn Module 1 bis 4 hintereinander angeordnet werden. Es muß nur die Länge der Backbänder 18 angepaßt werden.

Die Beladung auf der Beladeseite 48 durch das Kopf-Element 50 mit Backgut und die Entladung auf der Entladeseite 59 durch das Abschlußelement 52 erfolgen in der üblichen Weise wie bei Mehretagen-Durchlauföfen üblich und bekannt. In jedem Herd 6a bis 6e jedes Moduls 1 bis 4 lassen sich konstante Backverhältnisse, insbesondere also konstante Temperaturen einstellen, wobei die Temperatur über die Herde 6a bis 6e eines Moduls 1 bis 4 unterschiedlich sein kann, wenn unterschiedliches Backgut auf den einzelnen Backbändern 18 gebacken wird. Die Beladung erfolgt in der Weise, daß Backgut über das Kopf-Element 50 auf ein Backband aufgegeben wird, bis der entsprechende Backraum 7 des ersten Moduls 1 gefüllt ist. Nach Schließen der Klappen 55 wird der jeweilige Backraum 7 im Modul 1 für eine vorgegebene Zeit beschwadet und das Backgut über eine vorgegebene Zeit bei einer vorgegebenen konstanten Temperatur gebacken. Anschließend werden alle einem Backband 18 zugeordneten Klappen 55 geöffnet und das Backband 18 angetrieben, so daß das soeben angesprochene Backgut aus dem Backraum 7 des ersten Moduls 1 in den nachgeordneten Backraum 7 des Moduls 2 transportiert wird. Gleichzeitig wird neues Backgut für den Backraum 7 des ersten Moduls aufgegeben. Anschließend werden die Klappen 55 wieder geschlossen und das nunmehr im Backraum des zweiten Moduls 2 befindliche Backgut mit einer anderen, in der Regel niedrigeren Temperatur gebacken, wobei zum Entschwaden durch die Zuführleitung 44 Frischluft zugeführt wird. Diese Arbeitsschritte laufen solange ab, bis das eingangs angesprochene Backgut im letzten Modul 4 fertig gebacken ist und anschließend durch das Abschlußelement 52 auf der Entladeseite 59 wieder entnommen wird. Die Synchronisation der Beladung und Entladung der übereinander befindlichen Backbänder 18 erfolgt entsprechend dem Backprogramm für den Gesamtofen.

Durch Schließen der Regelklappen 31 und/oder 35 können einzelne Herde 6a bis 6e in sämtlichen Modulen 1 bis 4 außer Betrieb gesetzt werden, so daß auf dem entsprechenden Backband 18 nur mit gespeicherter Energie gebacken wird. Diesem wird dadurch auch keine Wärme zugeführt.

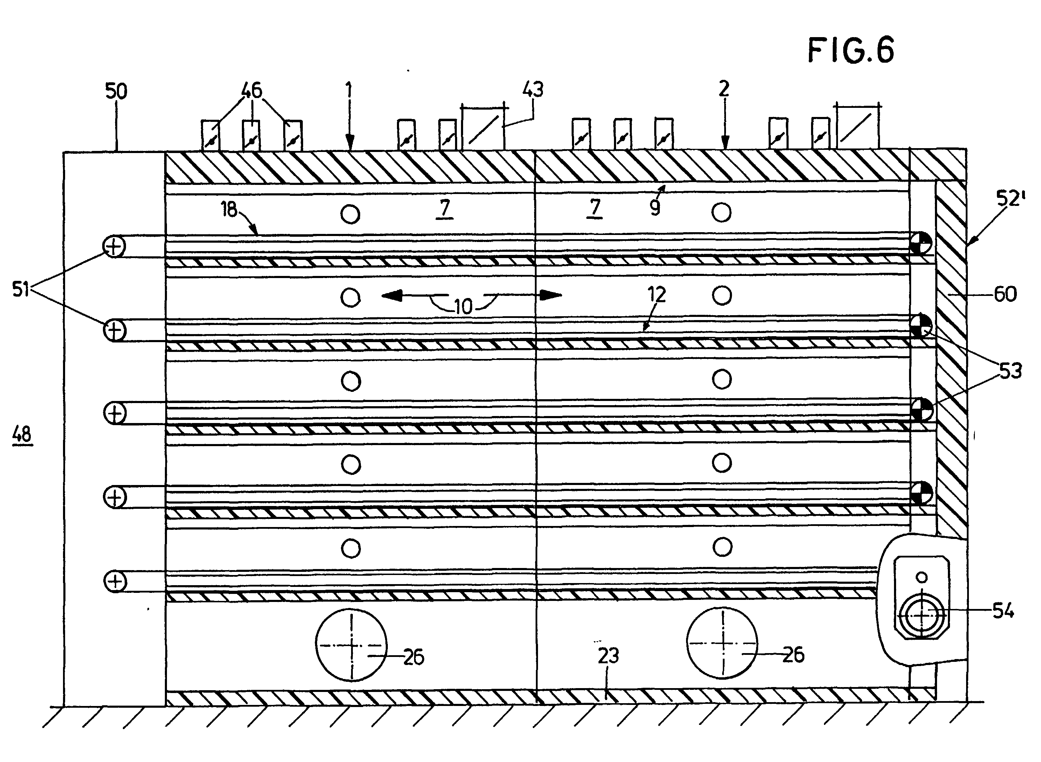

Fig. 6 veranschaulicht, daß mit der erfindungsgemäßen Modul-Bauweise auch ein reversierender Betrieb möglich ist, bei dem die Beladung und Entladung am Kopf-Element 50 erfolgt. In diesem Falle ist ein geschlossenes Abschlußelement 52' vorgesehen, das mit einer isolierten Rückwand 60 verschlossen ist. Zur Veranschaulichung ist der Pfeil 10 für die Transportrichtung des Backbandes 18 in beiden Richtungen eingezeichnet. Der jeweilige Antriebsmotor 54 muß entsprechend reversierbar antreibbar sein.

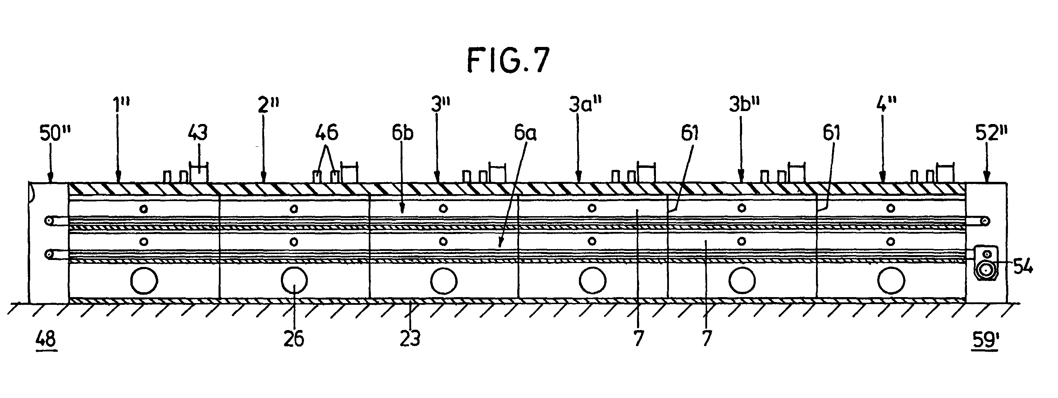

Nach Fig. 7 kann der Ofen kann auch als kontinuierlich arbeitender Mehretagen-Durchlaufofen betrieben werden. In diesem Fall wird die Zahl der Module 1'', 2'', 3'', 3a'', 3b'', 4'' größer sein als im dargestellten Ausführungsbeispiel. Weiterhin wird es hierbei zweckmäßig sein, keine Klappen 55 vorzusehen, da diese den kontinuierlichen Durchlauf des Backgutes behindern würden. Die Klappen 55 werden dann zumeist durch warmfeste Vorhänge 61 ersetzt. Im übrigen sind in Fig. 7, gleichermaßen wie in Fig. 6, für gleiche Teile die gleichen Bezugsziffern verwendet worden, wie bei dem eingangs geschilderten Ausführungsbeispiel, wobei dann, wenn die Teile konstruktiv nicht identisch sind, vergleichbare Teile mit der gleichen Bezugsziffer und einem hochgesetzten Doppelstrich bezeichnet werden.

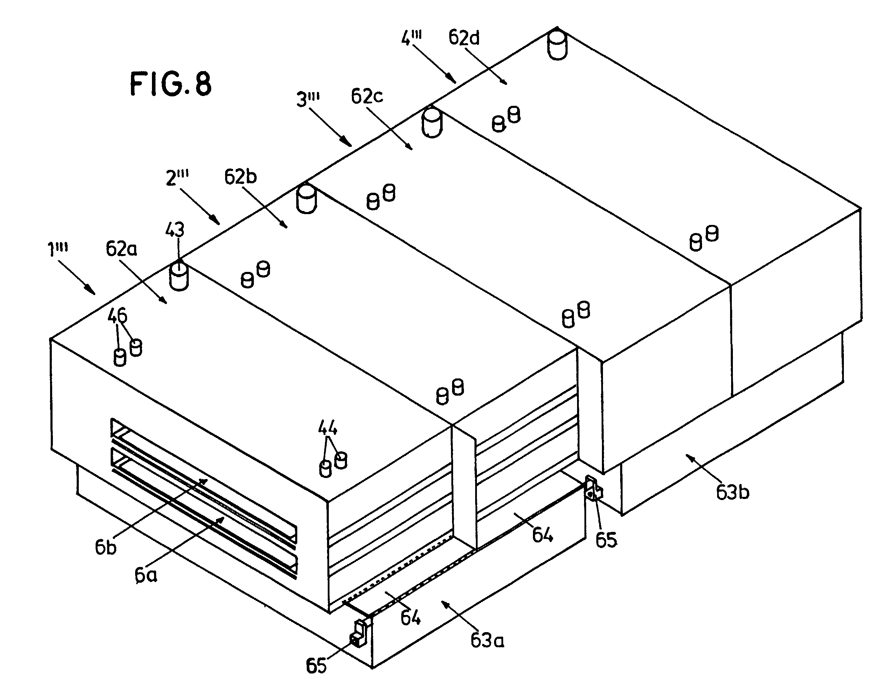

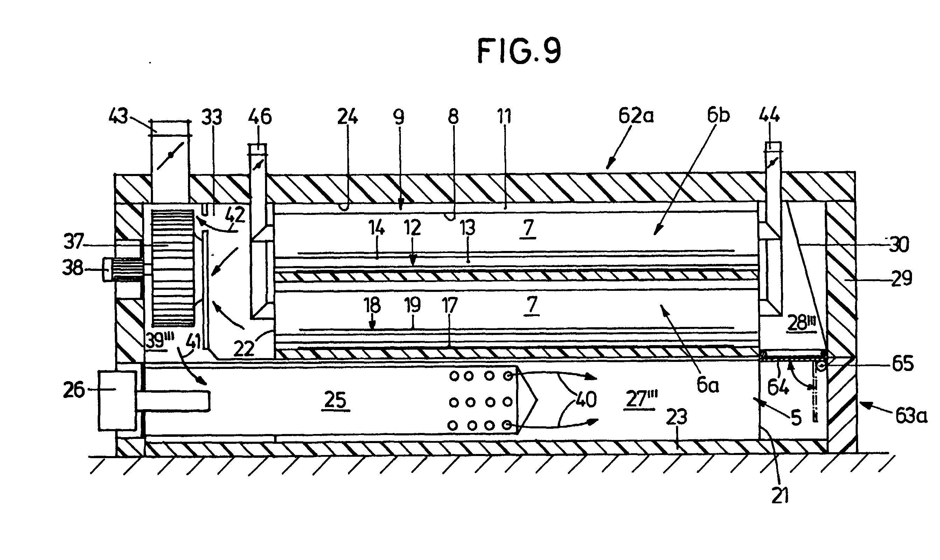

In den Figuren 8 und 9 ist eine weitere Ausführungsform eines Backofens gezeigt. Im folgenden werden lediglich die Abweichungen gegenüber dem eingangs geschilderten Ausführungsbeispiel erläutert, wobei identische Teile mit denselben Bezugszeichen und funktionell gleichwirkende Teile mit dem Bezugszeichen des vergleichbaren Teils des eingangs geschilderten Ausführungsbeispiels mit drei hochgesetzten Strichen bezeichnet werden. Der in Figur 8 dargestellte Backofen besteht aus mehreren Herd-Modulen 62a, 62b, 62c, 62d, die hintereinander angeordnet und miteinander verbunden sind. Ein Kopf-Element und ein Abschlußelement und die notwendigen Backbänder sind nicht dargestellt. Jeweils zwei Herd-Module 62a, 62b und 62c, 62d sind auf jeweils einem Brenner-Modul 63a bzw. 63b angeordnet. Es besteht auch die Möglichkeit, auf einem Brenner-Modul 63a bzw. 63b drei oder mehr der Herd-Module 62a, 62b, 62c, 62d anzuordnen. Diese sind wie der in Figur 1 oberhalb des Brenners 26 befindliche Teil jedes Ofenmoduls 1, 2, 3, 4 aufgebaut. Das Brenner-Modul 63a bzw. 63b weist wie das in Figur 1 gezeigte Ausführungsbeispiel einen Brenner 26 mit Brennkammer 25 auf, welchem ein Heizgas-Mischraum 27''' nachgeordnet ist, der sich hinsichtlich seiner Breite im wesentlichen über zwei der Herd-Module 62a, 62b bzw. 62c, 62d erstreckt, wobei jeweils ein Brenner 26 mittig unter diesen angeordnet ist. Am unteren Ende der Heizgas-Zuführkanäle 28"' der Herd-Module 62a, 62b bzw. 62c, 62d in jedem Brenner-Modul 63a, 63b sind Heizgas-Klappen 64 vorgesehen. Die durch einen Stellantrieb 65, der ein Elektromotor sein kann, verschwenkbaren Heizgas-Klappen 64 sind zwischen einer ersten Endstellung, in der der zugehörige Heizgas-Zuführkanal 28"' verschlossen ist, und einer zweiten Stellung, in der der Heizgas-Zuführkanal 28"' vollständig geöffnet ist, kontinuierlich verschwenkbar, so daß ein durch die Stellung der Heizgas-Klappen 64 vorgebbarer Anteil des vom Brenner 26 erhitzten Heizgas-Stromes in das jeweilige Herd-Modul 62a oder 62b bzw. 62c oder 62d gelangt. Durch die relative Einstellung der Heizgas-Klappen 64 der zum Brenner-Modul 63a gehörenden Herd-Module 62a, 62b bzw. zum Brenner-Modul 63b gehörenden Herd-Module 62c, 62d kann eine Aufteilung des Heizgas-Stromes in Abhängigkeit von den in den jeweiligen Herd-Modulen 62a, 62b, 62c, 62d gewünschten Temperaturen erreicht werden. Nachdem das Heizgas die jeweiligen Backräume 7 durchströmt hat, wird das Heizgas in Heizgas-Rückführkanälen 39''' dem jeweiligen Brenner 26 zugeführt.

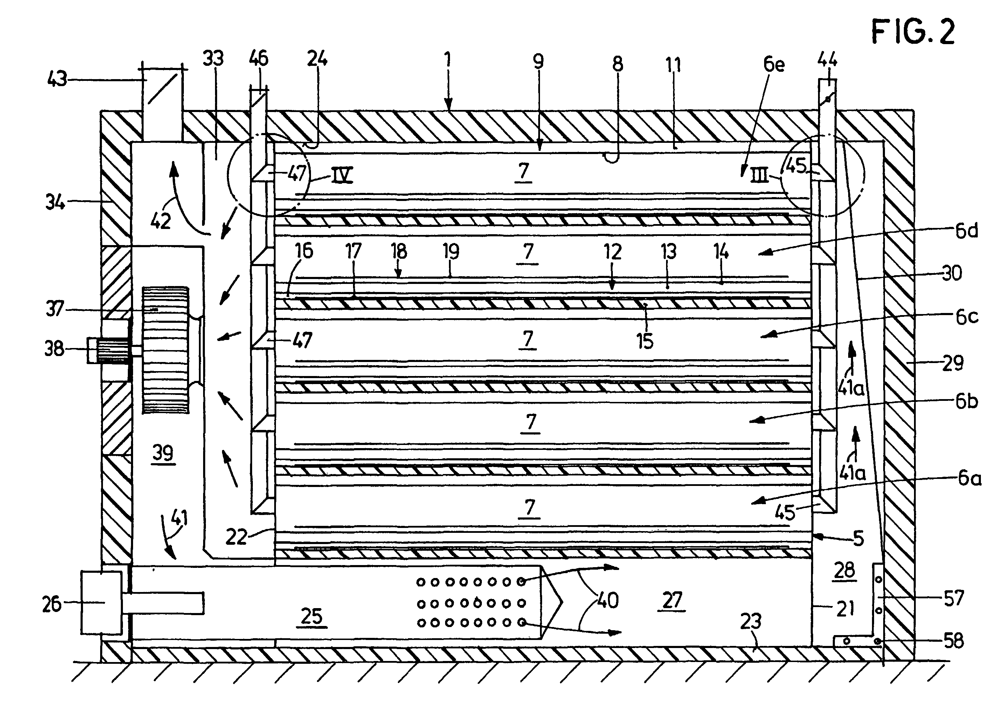

In den Figuren 8 und 9 sind im Gegensatz zu den Figuren 1 und 2 lediglich zwei Herde 6a, 6b angezeigt. Es versteht sich von selbst, daß weitere Herde vorgesehen sein können.

## Patentansprüche

1. Backofen
- mit mehreren in Längsrichtung (10) hintereinander angeordneten Ofen-Modulen (1 bis 4), die jeweils
-- mehrere übereinander angeordnete Herde (6a bis 6e) mit in hintereinander befindlichen Ofen-Modulen (1 bis 4) miteinander fluchtend angeordneten Backräumen (7),
-- eine eigenständig regelbare Heizeinrichtung,
-- mindestens eine zu den Herden (6a bis 6e) führende Zuführleitung (44, 44'') für Schwaden und/oder Frischluft und
**dadurch gekennzeichnet, daß** der Backofen folgende Merkmale aufweist:
-- mindestens eine von jedem Herd (6a bis 6e) wegführende Abführleitung (46) für Schwaden und/oder Abluft,
- sich durch miteinander fluchtend angeordnete Backräume (7) erstrekkende Backbänder (18),
- einem an einer Beladeseite (48) angeordneten Kopf-Element (50) mit Umlenkrollen (51) für die Backbänder (18),
- einem von dem Kopf-Element (50) entfernt angeordneten Abschlußelement (52, 52') mit Umlenkrollen (53) für die Backbänder (18) und
- mit mindestens einem Antriebsmotor (54) für die Backbänder (18).

2. Backofen nach Anspruch 1,
wobei die Backräume (7) jedes Ofen-Moduls (1 bis 4) - bezogen auf die Längsrichtung (10) - mindestens an einem Ende verschließbar sind.

3. Backofen nach Anspruch 1 oder 2,
wobei jeder Backraum (7) mittels einer oberhalb des Obertrums (19) des jeweiligen Backbandes (18) angeordneten Oberhitze-Heizung beheizbar ist.

4. Backofen nach einem der Ansprüche 1 bis 3,
wobei jeder Backraum (7) mittels einer unterhalb des Obertrums (19) und oberhalb des Untertrums (17) des jeweiligen Backbandes (18) befindlichen Unterhitze-Heizung beheizbar ist.

5. Backofen nach einem der Ansprüche 1 bis 4,
wobei jedes Ofen-Modul (1 bis 4) eine Heizgas-Heizeinrichtung mit einem Brenner (26) aufweist und
wobei die als Heizregister (9, 12) ausgebildeten Heizungen horizontal, quer zur Längsrichtung (10) von den Heizgasen durchströmbar ausgebildet sind.

6. Backofen nach Anspruch 5,
wobei benachbart zu einer seitlichen Außenwand (29) mindestens ein mit dem Brenner (26) verbundener, an die Heizregister (9, 12) angeschlossener Heizgas-Zuführkanal (28) und benachbart zu einer gegenüberliegenden seitlichen Außenwand (34) mindestens ein an die Heizregister (9, 12) angeschlossener und mit dem Brenner (26) verbundener Heizgas-Sammelraum (33) vorgesehen ist.

7. Backofen nach Anspruch 5 oder 6,
wobei die Heizregister (9, 12) an ihren Eintrittsöffnungen (32) und/oder an ihren Austrittsöffnungen (36) mit Regelklappen (31, 35) versehen sind.

8. Backofen nach Anspruch 7,
wobei dem Heizgas-Sammelraum (33) ein Heizgas-Gebläse (37) zugeordnet ist.

9. Backofen nach Anspruch 5,
wobei die Heizregister (9, 12) geradlinig von den Heizgasen durchströmbar ausgebildet sind.

10. Backofen nach Anspruch 2,
wobei die Backräume (7) jedes Ofen-Moduls (1 bis 4) mittels mindestens einer Klappe (55) verschließbar sind.

11. Backofen nach Anspruch 2,
wobei die Backräume (7) jedes Ofen-Moduls (1'', 2'', 3'', 3a'', 3b'', 4'') mittels mindestens eines warmfesten Vorhangs (60) verschließbar sind.

12. Backofen nach einem der Ansprüche 1, 2, 3, 4, 10 oder 11,
wobei die Heizeinrichtungen von mindestens zwei Ofen-Modulen (1''', 2''', 3''', 4''') mit einem gemeinsamen Brenner-Modul (63a, 63b) verbunden sind.

13. Backofen nach Anspruch 12,
wobei das Brenner-Modul (63a, 63b) eine der Zahl der kombinierten Ofen-Module (1''', 2''', 3''', 4"') entsprechende Anzahl von Heizgas-Klappen (64) aufweist, die zwischen einer ersten Stellung, in der die Zuführung von Heizgas zum jeweiligen Ofen-Modul (1''', 2''', 3''', 4"') versperrt wird, und einer zweiten Stellung, in der die Zuführung eines Heizgases zum jeweiligen Ofen-Modul (1''', 2''', 3''', 4''') vollständig freigegeben ist, und Zwischenstellungen verschwenkbar sind.

14. Backofen nach Anspruch 13,
wobei die Heizgas-Klappen (64) mittels Stellantrieben (65) verstellbar sind.

## Claims

1. A baking oven comprising
- several oven modules (1 to 4) disposed one after the other in the longitudinal direction (10), each of which having
-- several hearths (6a to 6e) disposed one above the other and possessing baking spaces (7) which are disposed in alignment with each other in successive oven modules (1 to 4),
-- an independently controllable heating device,
-- at least one supply duct (44, 44") for vapor and/or fresh air which leads to the hearths (6a to 6e), and
**characterized in that** the baking oven has the following features:
-- at least one discharge duct (46) for vapor and/or waste air which leads away from each hearth (6a to 6e),
- baking conveyor belts (18) running through baking spaces (7) which are in alignment with each other;
- a head member (50) disposed on a charging side (48) and having deflection pulleys (51) for the baking conveyor belts (18);
- a tail member (52, 52') disposed at a distance from the head member (50) and having deflection pulleys (53) for the baking conveyor belts (18); and
- at least one driving motor (54) for the baking conveyor belts (18).

2. A baking oven according to claim 1,
wherein the baking spaces (7) of each oven module (1 to 4) - related to the longitudinal direction (10) - are closable at least at one end.

3. A baking oven according to claim 1 or 2,
wherein each baking space (7) is heatable by means of an upper-heat heating device which is disposed above the upper strand (19) of the respective baking conveyor belt (18).

4. A baking oven according to one of claims 1 to 3,
wherein each baking space (7) is heatable by means of a bottom-heat heating device which is disposed underneath the upper strand (19) and above the lower strand (17) of the respective baking conveyor belt (18).

5. A baking oven according to one of claims 1 to 4,
wherein each oven module (1 to 4) comprises a heating-gas heating device with a burner (26), and
wherein the heating devices in the form of heating elements (9, 12) are formed for the heating gases to be able to flow through them horizontally, at right angles to the longitudinal direction (10).

6. A baking oven according to claim 5,
wherein at least one heating gas supply channel (28), which is connected with the burner (26) and with the heating elements (9, 12), is provided in vicinity to a lateral outer wall (29), and at least one heating gas collecting chamber (33), which is connected with the heating elements (9, 12) and with the burner (26), is provided in vicinity to an opposite lateral outer wall (34).

7. A baking oven according to claim 5 or 6,
wherein the inlets (32) and/or the outlets (36) of the heating elements (9, 12) are provided with regulating flaps (31, 35).

8. A baking oven according to claim 7,
wherein a heating gas blower (37) is allocated to the heating gas collecting chamber (33).

9. A baking oven according to claim 5,
wherein the heating elements (9, 12) are formed for the heating gases to be able to flow through them in a straight line.

10. A baking oven according to claim 2,
wherein the baking spaces (7) of each oven module (1 to 4) are closable by at least one flap (55).

11. A baking oven according to claim 2,
wherein the baking spaces (7) of each oven module (1", 2", 3",. 3a", 3b", 4") are closable by at least one heat resisting curtain (60).

12. A baking oven according to one of claims 1, 2, 3, 4, 10 or 11,
wherein the heating devices of at least two oven modules (1"', 2"', 3"', 4"') are connected with a joint burner module (63a, 63b).

13. A baking oven according to claim 12,
wherein the burner module (63a, 63b) comprises a number of heating gas flaps (64) which corresponds to the number of the combined oven modules (1"', 2"', 3"', 4"'), the heating gas flaps (64) being pivotal between a first position in which the supply of heating gas to the respective oven module (1''', 2''', 3''', 4''') is blocked, and a second position in which the supply of heating gas to the respective oven module (1''', 2"', 3"', 4''') is completely freed, and intermediate positions.

14. A baking oven according to claim 13,
wherein the heating gas flaps (64) are adjustable by actuating drives (65).

## Revendications

1. Four de cuisson
- comportant plusieurs modules de four (1 à 4) agencés les uns derrière les autres en direction longitudinale (10), qui comprennent chacun
-- plusieurs foyers (6a à 6e) agencés les uns au-dessus des autres et comprenant des chambres de cuisson (7) agencées en alignement mutuel dans des modules de four (1 à 4) situés les uns derrière les autres,
-- un dispositif de chauffage réglable de façon autonome,
-- au moins une conduite d'alimentation (44, 44") menant vers les foyers (6a à 6e) et destinée à des fumées et/ou à l'air frais,
ce four de cuisson étant **caractérisé en ce qu'**il comporte :
- au moins une conduite d'évacuation (46) menant en éloignement de chaque foyer (6a à 6e) et destinée à des fumées et/ou à l'air évacué,
- des courroies de cuisson (18) s'étendant à travers des chambres de cuisson (7) agencées en alignement mutuel,
- un élément de tête (50) agencé sur un côté de chargement (48) et comportant des rouleaux de renvoi (51) pour les courroies de cuisson (18),
- un élément de fermeture (52, 52') agencé en éloignement de l'élément de tête (50) et comportant des rouleaux de renvoi (53) pour les courroies de cuisson (18), et
- au moins un moteur d'entraînement (54) pour les courroies de cuisson (18).

2. Four de cuisson selon la revendication 1, dans lequel les chambres de cuisson (7) de chaque module de four (1 à 4) sont susceptibles d'être refermées à au moins une extrémité par rapport à la direction longitudinale (10).

3. Four de cuisson selon l'une ou l'autre des revendications 1 et 2, dans lequel chaque chambre de cuisson (7) est susceptible d'être chauffée au moyen d'un chauffage de voûte agencé au-dessus du brin supérieur (19) de la courroie de cuisson respective (18).

4. Four de cuisson selon l'une des revendications 1 à 3, dans lequel chaque chambre de cuisson (7) est susceptible d'être chauffée au moyen d'un chauffage de fond situé au-dessous du brin supérieur (19) et au-dessus du brin inférieur (17) de la courroie de cuisson respective (18).

5. Four de cuisson selon l'une des revendications 1 à 4, dans lequel chaque module de four (1 à 4) comprend un dispositif de chauffage à gaz avec un brûleur (26), et les chauffages réalisés sous forme de registres de chauffage (9, 12) sont réalisés de manière à pouvoir être traversés horizontalement, transversalement à la direction longitudinale (10) par les gaz.

6. Four de cuisson selon la revendication 5, dans lequel, au voisinage d'une paroi extérieure latérale (29), il est prévu au moins un canal d'alimentation en gaz (28) relié au brûleur (26) et raccordé aux registres de chauffage (9, 12), et au voisinage d'une paroi extérieure latérale opposée (34), il est prévu au moins une chambre de collecte de gaz (33) raccordée aux registres de chauffage (9, 12) et reliée au brûleur (26).

7. Four de cuisson selon l'une ou l'autre des revendications 5 et 6, **caractérisé en ce que** les registres de chauffage (9, 12) sont pourvus de clapets de réglage (31, 35) à leurs ouvertures d'entrée (32) et/ou à leurs ouvertures de sortie (36).

8. Four de cuisson selon la revendication 7, dans lequel une soufflante de gaz (37) est associée à la chambre de collecte de gaz (33).

9. Four de cuisson selon la revendication 5, dans lequel les registres de chauffage (9, 12) sont réalisés de manière à pouvoir être traversés en ligne droite par les gaz.

10. Four de cuisson selon la revendication 2, dans lequel les chambres de cuisson (7) de chaque module de four (1 à 4) sont susceptibles d'être refermées par au moins un clapet (55).

11. Four de cuisson selon la revendication 2, dans lequel les chambres de cuisson (7) de chaque module de four (1", 2", 3", 3a", 3b", 4") sont susceptibles d'être refermées par au moins un rideau (60) résistant à la chaleur.

12. Four de cuisson selon l'une des revendications 1, 2, 3, 4, 10 ou 11, dans lequel les dispositifs de chauffage d'au moins deux modules de four (1''', 2''', 3''', 4''') sont reliés à un module de brûleur commun (63a, 63b).

13. Four de cuisson selon la revendication 12, dans lequel le module de brûleur (63a, 63b) comprend un certain nombre de clapets de gaz (64) qui correspond au nombre des modules de four combinés (1''', 2''', 3''', 4'''), qui sont susceptibles d'être pivotés entre une première position dans laquelle l'alimentation en gaz au module de four respectif (1''', 2''', 3"', 4"') est obturée, et une deuxième position dans laquelle l'alimentation en gaz au module de four respectif (1''', 2''', 3''', 4''') est complètement libérée, et des positions intermédiaires.

14. Four de cuisson selon la revendication 13, dans lequel les clapets de gaz (64) sont déplaçables au moyen de servomoteurs (65).
